# EUROPÄISCHE PATENTSCHRIFT

(11) **EP 0 692 860 B1**
(45) Veröffentlichungstag und Bekanntmachung des Hinweises auf die Patenterteilung: **18.03.1998**
(21) Anmeldenummer: 95110719.2
(22) Anmeldetag: 10.07.1995
(51) Int. Cl.: H02J 13/00

(54) **Verfahren und Vorrichtung zur Synchronisation von Zeitbasen serieller Informationsstände**
Method and device to synchronise time bases of the serial informations
Procédé et dispositif pour synchroniser des bases de temps des informations en série

(30) Priorität: 11.07.1994 DE 4424031
(43) Veröffentlichungstag der Anmeldung: 17.01.1996
(73) Patentinhaber: Mauell Weida GmbH, 07570 Weida / Thüringen (DE)
(72) Erfinder: Solf, Hartwig, 98693 Ilmenau (DE); Driessen, Walter, 40885 Ratingen (DE)
(74) Vertreter: Patentanwälte Gesthuysen, von Rohr, Weidener, Schüll, Häckel

(56) Entgegenhaltungen:
- EP-A- 0 318 689
- DE-A- 4 141 766
- DE-U- 9 214 314
- US-A- 5 301 122

## Beschreibung

Die Erfindung betrifft ein Verfahren und eine Vorrichtung zur Synchronisation von Zeitbasen serieller Informationsstände, insbesondere in einem Umspannwerk, wobei wenigstens ein übergeordneter Informationsstand und wenigstens ein untergeordneter Informationsstand vorgesehen sind, der übergeordnete Informationsstand und der untergeordnete Informationsstand über eine Kommunikationsverbindung, vorzugsweise über einen Lichtwellenleiter, miteinander verbunden sind und miteinander kommunizieren und wobei der übergeordnete Informationsstand eine Hauptrechnereinheit und eine Hauptzeitbasis und der untergeordnete Informationsstand eine Rechnereinheit und eine Zeitbasis aufweisen.

In einem Umspannwerk erfolgt nicht nur die Umspannung, sondern auch die Strom- oder Energieverteilung der von einem oder mehreren Kraftwerken gelieferten Energie an verschiedene Verbraucher Darüber hinaus wird auch die Stromverteilung überwacht und gesteuert. Zur Steuerung der Stromverteilung weist ein Umspannwerk in der Regel zumindest einen übergeordneten seriellen Informationsstand sowie üblicherweise mehrere, diesem zugeordnete untergeordnete Informationsstände auf. Die untergeordneten Informationsstände erfassen dabei verschiedene Prozeßdaten bzw. Meßwerte (z. B. Spannung, Frequenz, Phasenwinkel) der einzelnen Verbraucher, während der übergeordnete Informationsstand die einzelnen erfaßten Meßwerte miteinander vergleicht und - falls erforderlich - bei Abweichungen von den vorgegebenen Sollwerten entsprechende Umschaltvorgänge einleitet. Wichtig ist es dabei, daß die jeweiligen über die untergeordneten Informationsstände gemessen Prozeßdaten jeweils die gleiche Zeitbasis haben, um entsprechend miteinander verglichen werden zu können. Daher ist es erforderlich, die Zeitbasen der einzelnen Informationsstände zu synchronisieren.

Üblicherweise ist der übergeordnete Informationsstand mit jedem der untergeordneten Informationsstände über jeweils eine Kommunikationsverbindung, bei der es sich in der Regel um nur einen Lichtwellenleiter handelt, verbunden. Über die einzelnen Lichtwellenleiter kommuniziert der übergeordnete Informationsstand mit dem oder den untergeordneten Informationsständen.

Die Synchronisation erfolgt bei dem aus der Praxis bekannten, eingangs genannten Verfahren derzeit derart, daß der übergeordnete Informationsstand nach Ablauf eines Zeitintervalls seiner Hauptzeitbasis ein sogenanntes Telegramm über die Kommunikationsverbindung an den untergeordneten Informationsstand sendet, der den über Telegramm gesendeten Synchronisationsbefehl ausführt und seine Zeitbasis synchronisiert. Bei der Übertragung des Synchronisationsbefehls von der Hauptrechnereinheit zur Rechnereinheit per Telegramm kann es aber zu einem unbekannten Zeitfehler kommen, wenn die Rechnereinheit des untergeordneten Informationsstandes nicht in der Lage ist, den Synchronisationsbefehl umgehend auszuführen, da erst noch ein anderer Auftrag ausgeführt werden muß. Wenn die Ausführung des Synchronisationsbefehls erst mit einiger Verzögerung möglich ist, führt dies dazu, daß die Hauptzeitbasis und die Zeitbasis nicht synchron laufen.

Zur Vermeidung dieses Problems ist es daher weiterhin aus der Praxis bereits bekannt, sowohl der Hauptzeitbasis des übergeordneten Informationsstandes, als auch der Zeitbasis des untergeordneten Informationsstandes Funkuhren mit hochgenauen Funkuhrempfängern zuzuordnen. Bei diesem Verfahren ist eine Synchronisation an sich nicht mehr erforderlich, da die Hauptzeitbasis und die Zeitbasis immer die richtige "Zeit" anzeigen. Der Nachteil hierbei besteht allerdings darin, daß, um eine hochgenaue Synchronisation zu erreichen, dementsprechend exakte und hochgenaue Funkuhrempfänger verwendet werden müssen, die vergleichsweise teuer sind.

Die Erfindung geht nun einen neuen Weg, dessen Grundgedanke im Patentanspruch 1 angegeben ist. Erfindungsgemäß ist bei dem eingangs genannten Verfahren nun vorgesehen, daß zur Synchronisation die Hauptzeitbasis direkt mit der Zeitbasis über die Kommunikationsverbindung verbunden wird. Im einzelnen ist dabei vorgesehen, daß die Hauptrechnereinheit kurz vor Ablauf eines vorgegebenen Intervalls auf die Hauptzeitbasis und die Rechnereinheit kurz vor Ablauf des Intervalls auf die Zeitbasis schaltet, so daß die Hauptzeitbasis und die Zeitbasis über die Kommunikationsleitung direkt miteinander verbunden sind. Nach Ablauf des Intervalls sendet die Hauptzeitbasis einen Synchronisationsbefehl an die Zeitbasis und die Zeitbasis wird synchronisiert. Nach Absenden des Synchronisationsbefehls schaltet die Hauptzeitbasis dann auf die Hauptrechnereinheit und die Zeitbasis nach Empfang des Synchronisationsbefehl auf die Rechnereinheit um, so daß die Hauptrechnereinheit und die Rechnereinheit über die Kommunikationsleitung wieder direkt miteinander verbunden sind.

Vorrichtungsgemäß ist bei der Erfindung vorgesehen, daß die Verbindung zur Kommunikationsverbindung von der Hauptrechnereinheit auf die Hauptzeitbasis und umgekehrt bzw. von der Rechnereinheit auf die Zeitbasis und umgekehrt umschaltbar ist, so daß sowohl die Hauptrechnereinheit mit der Rechnereinheit, als auch die Hauptzeitbasis mit der Zeitbasis direkt miteinander kommunizieren können.

Durch die Umschaltung der Hauptrechnereinheit auf die Hauptzeitbasis und der Rechnereinheit auf die Zeitbasis werden die Hauptzeitbasis und die Zeitbasis also direkt über den Lichtwellenleiter miteinander verbunden. Im Gegensatz zur Rechnereinheit ist die Zeitbasis jederzeit in der Lage, den Synchronisationsbefehl anzunehmen, so daß letztlich eine exakte Synchronisation gewährleistet ist. Ein weiterer Vorteil der Erfindung ergibt sich dadurch, daß sowohl für die Kommunikation der Hauptrechnereinheit und der Rechnereinheit, als auch für die Kommunikation der Hauptzeitbasis mit der Zeitbasis die gleiche Kommunikationsverbindung, also nur ein einziger Lichtwellenleiter verwendet werden muß. Dies spielt vor allem dann eine Rolle, wenn der übergeordnete Informationsstand und der untergeordnete Informationsstand räumlich viele Kilometer auseinander liegen. Dabei ist zu beachten, daß in der Regel einem übergeordneten Informationsstand nicht nur ein untergeordneter, sondern eine Mehrzahl untergeordneter Informationsstände zugeordnet ist.

Alternativ kann bei einem Verfahren der eingangs genannten Art vorgesehen sein, daß die Rechnereinheit kurz vor Ablauf eines vorgegeben Intervalls keine weiteren Aufträge mehr annimmt und / oder durchführt, so daß der bei Ablauf des Intervalls von der Hauptrechnereinheit oder der Hauptzeitbasis gesendete Synchronisationsbefehl unmittelbar von der Rechnereinheit zur Synchronisation der Zeitbasis verarbeitet werden kann. Die erwähnten Zeitfehler treten hierbei nicht auf. Besonders zweckmäßig ist es bei diesem Verfahren, wenn die Hauptrechnereinheit der Rechnereinheit kurz vor Ablauf des Intervalls einen entsprechenden Annahmestopbefehl sendet, so daß sichergestellt ist, daß die Rechnereinheit zum Empfang und zur unmittelbaren Verarbeitung des Synchronisationsbefehl bereit ist. Es versteht sich, daß auch bei diesem Verfahren der Synchronisationsbefehl vorzugsweise aus einem einzigen, bestimmten Impuls besteht.

Somit eignet sich das erfindungsgemäße Verfahren bzw. die erfindungsgemäße Vorrichtung nicht nur zur Anwendung in bestehenden Anlagen, in denen die einzelnen Informationsstände in der Regel jeweils nur über einen einzigen Leiter miteinander verbunden sind, sondern auch für neue Anlagen, wobei zwischen den einzelnen übergeordneten Informationsständen und untergeordneten Informationsständen jeweils nur ein einziger Leiter verlegt werden muß. Hierdurch kann eine enorme Menge an Leitermaterial und damit an Kosten eingespart wird.

Weitere Merkmale, Vorteile und Anwendungsmöglichkeiten der vorliegenden Erfindung ergeben sich aus der nachfolgenden Beschreibung von Ausführungsbeispielen, insbesondere anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen oder deren Rückbeziehung:
- Fig. 1: eine schematische Darstellung der Verbindung eines übergeordneten und eines untergeordneten Informationsstandes in Kommunikationsstellung der Hauptrechnereinheit und der Rechnereinheit und
- Fig. 2: eine der Fig. 1 entsprechende Darstellung in Kommunikationsstellung der Hauptzeitbasis und der Zeitbasis.

In den Figuren ist jeweils ein übergeordneten Informationsstand 1 und ein untergeordneter Informationsstand 2 vorgesehen, die über eine einzige Kommunikationsverbindung 3 miteinander verbunden sind. Der übergeordnete Informationsstand und der untergeordnete Informationsstand 2 sind Teil eines nicht näher dargestellten Umspannwerkes. Bei der Kommunikationsverbindung handelt es sich um einen einzelnen Leiter, vorzugsweise einen Lichtwellenleiter. Über die Kommunikationsverbindung 3 kommunizieren der übergeordnete Informationsstand 1 und der untergeordnete Informationsstand 2 seriell miteinander.

Der übergeordnete Informationsstand weist eine Hauptrechnereinheit 4 und eine Hauptzeitbasis 5 auf. Die Hauptzeitbasis 5, die auch als innere Uhr der Hauptrechnereinheit 4 bezeichnet werden könnte, ist mit der Hauptrechnereinheit 4 verbunden. Der untergeordnete Informationsstand 2 weist eine Rechnereinheit 6 und eine Zeitbasis 7 auf, wobei die Zeitbasis 7 mit der Rechnereinheit 6 ebenfalls verbunden ist. Die Zeitbasis 7 stellt an sich die "innere Uhr" der Rechnereinheit 6 dar.

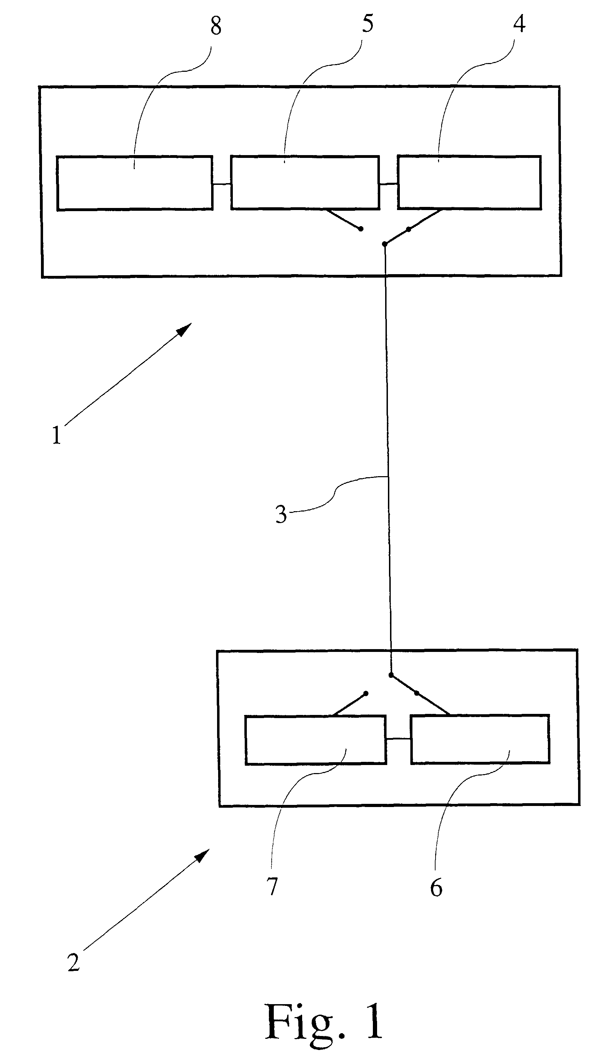

Im in Fig. 1 dargestellten Zustand ist die Hauptrechnereinheit 4 direkt über die Kommunikationsleitung 3 mit der Rechnereinheit 6 verbunden. Der in Fig. 1 dargestellte Zustand entspricht an sich dem Stand der Technik, wobei die Hauptrechnereinheit 4 "ohne Ankündigung" und ohne daß die Rechnereinheit 6 darauf vorbereitet wäre einen Synchronisationsbefehl in Telegrammform an die Rechnereinheit 6 sendet.

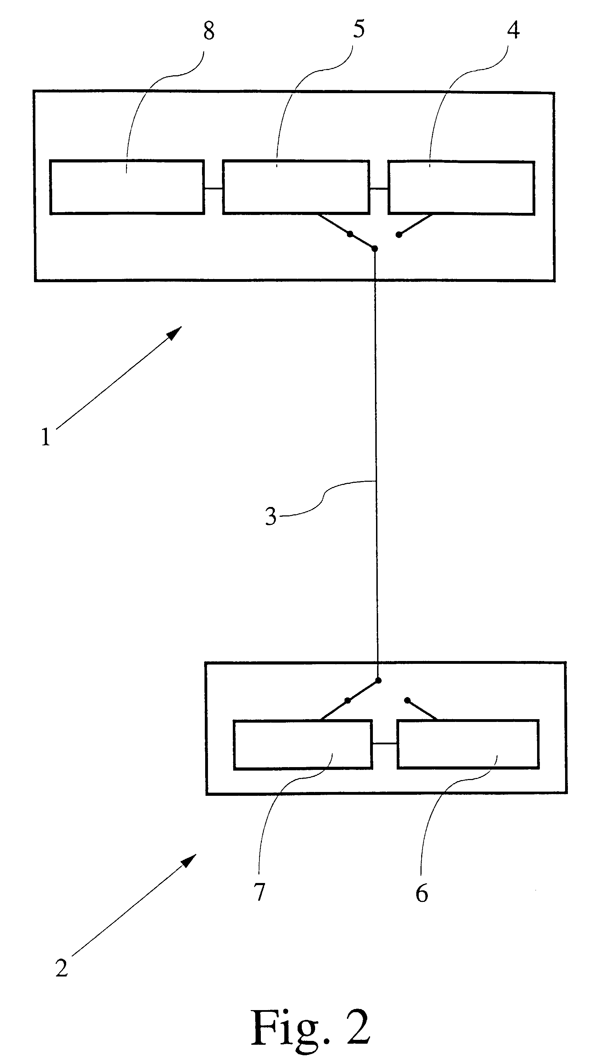

Wesentlich ist bei der Erfindung nun, daß zur Synchronisation der Zeitbasis 7 die Hauptzeitbasis 5 direkt und zwar über die einzige Kommunikationsverbindung 3 mit der Zeitbasis 7 verbunden wird. Dieser Zustand ist in Fig. 2 dargestellt. Erfindungsgemäß wird also die einzige Kommunikationsverbindung 3 zur direkten Verbindung der Hauptzeitbasis 5 und der Zeitbasis 7 ausgenutzt. Ein von der Hauptzeitbasis 5 gesendeter Synchronisationsbefehl kann von der Zeitbasis 7 auf diese Weise sofort verarbeitet werden, so daß eine hochgenaue Synchronisation möglich ist.

Im einzelnen läuft das erfindungsgemäße Verfahren nun wie folgt ab, wobei zunächst auf den in Fig. 1 dargestellten Zustand ausgegangen wird:

Während des Betriebs ist also, wie bereits erwähnt, die Hauptrechnereinheit 4 mit der Rechnereinheit 6 über die Kommunikationsverbindung 3 direkt verbunden. Kurz vor Ablauf eines vorgegebenen Synchronisationsintervalls, das im folgenden lediglich als "Intervall" bezeichnet wird, schaltet die Hauptrechnereinheit 4 auf die Hauptzeitbasis 5 um. Dieser Zustand ist in Fig. 2 beim übergeordneten Informationsstand 1 gezeigt. Außerdem schaltet die Rechnereinheit 6 kurz vor Ablauf des Intervalls auf die Zeitbasis 7 um. Es ergibt sich somit der in Fig. 2 dargestellte Zustand, wobei die Hauptzeitbasis 5 direkt mit der Zeitbasis 7 über die einzige Kommunikationsverbindung 3 verbunden ist. Nach Ablauf des Intervalls sendet die Hauptzeitbasis 5 einen Synchronisationsbefehl direkt an die Zeitbasis 7 über die Kommunikationsverbindung. Aufgrund des Synchronisationsbefehls wird die Zeitbasis 7 synchronisiert. Nach Ablauf des Intervalls bzw. der Synchronisation der Zeitbasis 7 beginnt sowohl für die Hauptzeitbasis 5 als auch für die Zeitbasis 7 etwa gleichzeitig ein neues Intervall zu laufen.

Nach Absenden des Synchronisationsbefehls schaltet die Hauptzeitbasis 5 auf die Hauptrechnereinheit 4 zurück. Dieser Zustand ist in Fig. 1 beim übergeordneten Informationsstand 1 dargestellt. Außerdem schaltet die Zeitbasis 7 nach Empfang des Synchronisationsbefehls auf die Rechnereinheit 6 um, so daß sich wieder der in Fig. 1 dargestellte Zustand ergibt, in dem die Hauptrechnereinheit 4 und die Rechnereinheit 6 direkt über die einzige Kommunikationsverbindung 3 miteinander verbunden sind.

Um die Synchronisation so genau und so schnell wie möglich durchzuführen kommunizieren im in Fig. 2 dargestellten Zustand die Hauptzeitbasis 5 und die Zeitbasis 7 über die Kommunikationsverbindung 3 nicht in Form eines Telegramms, was für die Kommunikation zwischen Hauptrechnereinheit 4 und Rechnereinheit 6 üblich ist, sondern die Synchronisation bzw. der Synchronisationsbefehl wird als ein einzelner Impuls gesendet. Dabei ist es von besonderem Vorteil, wenn es sich bei diesem Impuls um einen ganz bestimmten Impuls handelt, so daß möglicherweise auftretende ungewollte Impulse nicht zur Synchronisation der Zeitbasis 7 führen. Da während des in Fig. 2 dargestellten Zustandes die Hauptrechnereinheit 4 und die Rechnereinheit 6 nicht miteinander kommunizieren können, sollte dieser Zustand so kurzzeitig wie möglich sein. Aus diesem Grunde bietet es sich an, wenn die Hauptzeitbasis 5 unmittelbar nach Absendung des Synchronisationsbefehls auf die Hauptrechnereinheit 4 umschaltet, so daß diese wieder mit der Kommunikationsverbindung 3 verbunden ist. Gleiches gilt für den untergeordneten Informationsstand 3. Hierbei sollte zweckmäßigerweise die Zeitbasis 7 unmittelbar nach Empfang des Synchronisationsbefehls auf die Rechnereinheit wieder umschalten, so daß diese mit der Kommunikationsverbindung 3 verbunden ist.

Um die Gefahr zu verringern, daß die Rechnereinheit 6 nicht oder nur zu spät auf die Zeitbasis 7 umschaltet, bietet es sich auch an, daß die Hauptrechnereinheit 4 kurz vor Ablauf des Intervalls einen Umschaltbefehl an die Rechnereinheit 6 zum Umschalten auf die Zeitbasis 7 sendet, so daß diese mit der Kommunikationsleitung 3 verbunden ist. Die Hauptrechnereinheit 4 selbst schaltet dann nach Absenden des Umschaltbefehls auf die Hauptzeitbasis 5 um, so daß diese mit der Kommunikationsverbindung 3 verbunden ist.

Weiterhin ist vorgesehen, daß die Synchronisation in periodischen Abständen erfolgt, wobei die Intervalldauer eine Minute betragen kann.

Da nicht nur die relative Zeit für den Prozeßdatenvergleich im Umspannwerk interessant ist, sondern auch die absolute Zeit, ist es weiterhin von Vorteil, wenn, wie in den Fig. 1 und 2 dargestellt, der Hauptzeitbasis 5 zur Bestimmung der absoluten Zeit ein Funkuhrempfänger 8 zugeordnet ist.

Alternativ kann bei einem Verfahren der eingangs genannten Art vorgesehen sein, daß die Rechnereinheit 6 kurz vor Ablauf eines vorgegeben Intervalls keine weiteren Aufträge mehr annimmt und / oder durchführt. Durch diese Maßnahme kann bei Ablauf des Intervalls der von der Hauptrechnereinheit 4 oder der Hauptzeitbasis 5 gesendete Synchronisationsbefehl unmittelbar von der Rechnereinheit 6 zur Synchronisation der Zeitbasis 7 verarbeitet werden Besonders zweckmäßig ist es dabei, wenn die Hauptrechnereinheit 4 der Rechnereinheit 6 kurz vor Ablauf des Intervalls einen entsprechenden Annahmestopbefehl sendet, so daß sichergestellt ist, daß die Rechnereinheit 6 zum Empfang und zur unmittelbaren Verarbeitung des Synchronisationsbefehl bereit ist. Es sei darauf hingewiesen, daß bei diesem Verfahren selbstverständlich die vorerwähnten Merkmale, soweit technisch möglich, ebenfalls Anwendung finden.

## Patentansprüche

1. Verfahren zur Synchronisation von Zeitbasen (7) serieller Informationsstände (2), insbesondere in einem Umspannwerk, wobei wenigstens ein übergeordneter Informationsstand (1) und wenigstens ein untergeordneter Informationsstand (2) vorgesehen sind, der übergeordnete Informationsstand (1) und der untergeordnete Informationsstand (2) über eine Kommunikationsverbindung (3), vorzugsweise über einen Lichtwellenleiter, miteinander verbunden sind und miteinander kommunizieren, wobei der übergeordnete Informationsstand (1) eine Hauptrechnereinheit (4) und eine Hauptzeitbasis (5) und der untergeordnete Informationsstand (2) eine Rechnereinheit (6) und eine Zeitbasis (7) aufweisen, **dadurch gekennzeichnet**, daß zur Synchronisation die Hauptzeitbasis (5) direkt mit der Zeitbasis (7) über die Kommunikationsverbindung (3) verbunden wird.

2. Verfahren nach Anspruch 1, dadurch gekennzeichnet, daß die Hauptrechnereinheit (4) kurz vor Ablauf eines vorgegebenen Intervalls auf die Hauptzeitbasis (5) umschaltet, so daß die Hauptzeitbasis mit der Kommunikationsverbindung (3) direkt verbunden ist.

3. Verfahren nach Anspruch 1 oder 2, dadurch gekennzeichnet, daß die Rechnereinheit (6) kurz vor Ablauf eines Intervalls auf die Zeitbasis (7) umschaltet, so daß die Zeitbasis (7) direkt mit der Kommunikationsverbindung (3) verbunden ist.

4. Verfahren nach einem der Ansprüche 1 bis 3, dadurch gekennzeichnet, daß die Hauptzeitbasis (5) nach Ablauf eines Intervalls einen Synchronisationsbefehl an die Zeitbasis (7) sendet, so daß die Zeitbasis (7) synchronisiert wird.

5. Verfahren nach einem der Ansprüche 1 bis 4, dadurch gekennzeichnet, daß die Hauptzeitbasis (5) vorzugsweise unmittelbar nach Absenden des Synchronisationsbefehls auf die Hauptrechnereinheit (4) und die Zeitbasis (7) vorzugsweise unmittelbar nach Empfang des Synchronisationsbefehls auf die Rechnereinheit (6) umschaltet, so daß die Hauptrechnereinheit (4) und die Rechnereinheit (6) über die Kommunikationsverbindung (3) wieder direkt miteinander verbunden sind.

6. Verfahren nach einem der Ansprüche 1 bis 5, dadurch gekennzeichnet, daß als Synchronisationsbefehl ein einzelner, vorzugsweise ein bestimmter Impuls gesendet wird.

7. Verfahren nach einem der Ansprüche 1 bis 6, dadurch gekennzeichnet, daß die Hauptrechnereinheit (4) kurz vor Ablauf eines Intervalls einen Umschaltbefehl an die Rechnereinheit (6) zum Umschalten auf die Zeitbasis (7) sendet, um die Zeitbasis (7) direkt mit der Kommunikationsverbindung (3) zu verbinden.

8. Verfahren nach einem der Ansprüche 4 bis 7, dadurch gekennzeichnet, daß die Synchronisation der Zeitbasis (7) in periodischen Abständen erfolgt und daß, vorzugsweise, die Intervalldauer etwa eine Minute beträgt.

9. Verfahren nach einem der Ansprüche 1 bis 8, dadurch gekennzeichnet, daß der Hauptzeitbasis (5) zur Bestimmung der absoluten Zeit ein Funkuhrempfänger zugeordnet ist.

10. Verfahren zur Synchronisation von Zeitbasen (7) serieller Informationsstände (2), insbesondere in einem Umspannwerk, wobei wenigstens ein übergeordneter Informationsstand (1) und wenigstens ein untergeordneter Informationsstand (2) vorgesehen sind, der übergeordnete Informationsstand (1) und der untergeordnete Informationsstand (2) über eine Kommunikationsverbindung (3), vorzugsweise über einen Lichtwellenleiter, miteinander verbunden sind und miteinander kommunizieren, wobei der übergeordnete Informationsstand (1) eine Hauptrechnereinheit (4) und eine Hauptzeitbasis (5) und der untergeordnete Informationsstand (2) eine Rechnereinheit (6) und eine Zeitbasis (7) aufweisen, insbesondere nach einem der Ansprüche 1 bis 9, **dadurch gekennzeichnet**, daß die Rechnereinheit (6) kurz vor Ablauf eines vorgegeben Intervalls keine weiteren Aufträge mehr annimmt und/oder durchführt, so daß bei Ablauf des Intervalls der von der Hauptrechnereinheit (4) oder der Hauptzeitbasis (5) gesendete Synchronisationsbefehl unmittelbar von der Rechnereinheit (6) zur Synchronisation der Zeitbasis (7) verarbeitet werden kann.

11. Verfahren nach Anspruch 10, dadurch gekennzeichnet, daß die Hauptrechnereinheit (4) der Rechnereinheit (6) kurz vor Ablauf des Intervalls einen entsprechenden Annahmestopbefehl sendet, keine weiteren Aufträge auszuführen, so daß die Rechnereinheit (6) zum Empfang und zur unmittelbaren Verarbeitung des Synchronisationsbefehl nach dessen Empfang bereit ist.

12. Vorrichtung zur Synchronisation von Zeitbasen (7) serieller Informationsstände (2), insbesondere in einem Umspannwerk und insbesondere zur Durchführung des Verfahrens nach einem der Ansprüche 1 bis 11, wobei wenigstens ein übergeordneter Informationsstand (1) und wenigstens ein untergeordneter Informationsstand (2) vorgesehen sind, der übergeordnete Informationsstand (1) und der untergeordnete Informationsstand (2) über eine Kommunikationsverbindung (3), vorzugsweise über einen Lichtwellenleiter, miteinander verbunden sind und miteinander kommunizieren, wobei der übergeordnete Informationsstand (1) eine Hauptrechnereinheit (4) und eine Hauptzeitbasis (5) und der untergeordnete Informationsstand (2) eine Rechnereinheit (6) und eine Zeitbasis (7) aufweisen, **dadurch gekennzeichnet**, daß die Verbindung zur Kommunikationsverbindung (3) von der Hauptrechnereinheit (4) auf die Hauptzeitbasis (5) und umgekehrt bzw. von der Rechnereinheit (6) auf die Zeitbasis (7) und umgekehrt umschaltbar ist, so daß sowohl die Hauptrechnereinheit (4) mit der Rechnereinheit (6), als auch die Hauptzeitbasis (5) mit der Zeitbasis (7) direkt miteinander kommunizieren können.

## Claims

1. A procedure for the synchronisation of time bases (7) of serial information states (2), particularly in a substation, wherein at least one superordinate information state (1) and at least one subordinate information state (2) are provided, the superordinate information state (1) and the subordinate information state (2) are connected to each other and communicate with each other via a communication linkage (3), preferably via a fibre optic connection, wherein the superordinate information state (1) comprises a main computer unit (4) and a main time base (5) and the subordinate information state (2) comprises a computer unit (6) and a time base (7), **characterised in that** the main time base (5) is directly connected to the time base (7) via the communication linkage (3) for synchronisation.

2. A procedure according to claim 1, characterised in that the main computer unit (4) switches over to the main time base (5) shortly before the elapse of a predetermined interval, so that the main time base is directly connected to the communication linkage (3).

3. A procedure according to claim 1 or 2, characterised in that the computer unit (6) switches over to the time base (7) shortly before the elapse of a predetermined interval, so that the time base (7) is directly connected to the communication linkage (3).

4. A procedure according to any one of claims 1 to 3, characterised in that after the elapse of an interval the main time base (5) sends a synchronisation command to the time base (7), so that the time base (7) is synchronised.

5. A procedure according to any one of claims 1 to 4, characterised in that the main time base (5) preferably switches over to the main computer unit (4) immediately after emitting the synchronisation command, and the time base (7) preferably switches over to the computer unit (6) immediately after receiving the synchronisation command, so that the main computer unit (4) and the computer unit (6) are again directly connected to each other via the communication linkage (3).

6. A procedure according to any one of claims 1 to 5, characterised in that a single pulse, preferably a defined pulse, is transmitted as the synchronisation command.

7. A procedure according to any one of claims 1 to 6, characterised in that shortly before the elapse of an interval the main computer unit (4) sends a switch-over command to the computer unit (6) for switching over to the time base (7), in order to connect the time base (7) directly to the communication linkage (3).

8. A procedure according to any one of claims 4 to 7, characterised in that synchronisation of the time base (7) is effected at periodic intervals and that the duration of an interval is preferably about one minute.

9. A procedure according to any one of claims 1 to 8, characterised in that a radio clock receiver for determining the absolute time is associated with the main time base (5).

10. A procedure for the synchronisation of time bases (7) of serial information states (2), particularly in a substation, wherein at least one superordinate information state (1) and at least one subordinate information state (2) are provided, the superordinate information state (1) and the subordinate information state (2) are connected to each other and communicate with each other via a communication linkage (3), preferably via a fibre optic connection, wherein the superordinate information state (1) comprises a main computer unit (4) and a main time base (5) and the subordinate information state (2) comprises a computer unit (6) and a time base (7), particularly according to any one of claims 1 to 9, **characterised in that** shortly before the elapse of a predetermined interval the computer unit (6) accepts and/or executes no more instructions, so that on the elapse of the interval the synchronisation command sent by the main computer unit (4) or by the main time base (5) can be processed directly by the computer unit (6) in order to synchronise the time base (7).

11. A procedure according to claim 10, characterised in that shortly before the elapse of the interval the main computer unit (4) sends the computer unit (6) a corresponding acceptance stop command to execute no further instructions, so that the computer unit (6) is ready for the reception of the synchronisation command and for the processing thereof after its reception.

12. An apparatus for the synchronisation of time bases (7) of serial information states (2), particularly in a substation and particularly for carrying out the procedure according to any one of claims 1 to 11, wherein at least one superordinate information state (1) and at least one subordinate information state (2) are provided, the superordinate information state (1) and the subordinate information state (2) are connected to each other and communicate with each other via a communication linkage (3), preferably via an optical wave guide, wherein the superordinate information state (1) comprises a main computer unit (4) and a main time base (5) and the subordinate information state (2) comprises a computer unit (6) and a time base (7), **characterised in that** the connection to the communication linkage (3) can be switched from the main computer unit (4) to the main time base (5) and the other way round or from the computer unit (6) to the time base (7) and the other way round, so that both the main computer unit (4) can communicate directly with the computer unit (6) and the main time base (5) can communicate directly with the time base (7).

## Revendications

1. Procédé pour la synchronisation de bases de temps (7) d'états d'informations sériels (2), en particulier dans un poste de transformation, dans lequel on prévoit au moins un état d'informations prioritaire (1) et au moins un état d'informations secondaire (2), l'état d'informations prioritaire (1) et l'état d'informations secondaire (2) étant reliés l'un à l'autre et communiquant l'un avec l'autre via une connexion de communication (3), de préférence via un guide d'ondes lumineuses, dans lequel l'état d'informations prioritaire (1) présente une unité de calcul principale (4) et une base de temps principale (5), et l'état d'informations secondaire (2) présente une unité de calcul (6) et une base de temps (7), caractérisé en ce que, à des fins de synchronisation, la base de temps principale (5) est reliée directement à la base de temps (7) via la connexion de communication (3).

2. Procédé selon la revendication 1, caractérisé en ce que l'unité de calcul principale (4), peu de temps avant le déroulement d'un intervalle prédéfini, commute sur la base de temps principale (5), si bien que la base de temps principale est reliée directement à la connexion de communication (3).

3. Procédé selon la revendication 1 ou 2, caractérisé en ce que l'unité de calcul (6), peu de temps avant le déroulement d'un intervalle, commute sur la base de temps (7), si bien que la base de temps (7) est reliée directement à la connexion de communication (3).

4. Procédé selon l'une quelconque des revendications 1 à 3, caractérisé en ce que la base de temps principale (5), après le déroulement d'un intervalle, envoie un ordre de synchronisation à la base de temps (7), si bien que la base de temps (7) est synchronisée.

5. Procédé selon l'une quelconque des revendications 1 à 4, caractérisé en ce que la base de temps principale (5) commute sur l'unité de calcul principale (4) de préférence immédiatement après l'envoi de l'ordre de synchronisation et la base de temps (7) commute sur l'unité de calcul (6) de préférence immédiatement après réception de l'ordre de synchronisation, si bien que l'unité de calcul principale (4) et l'unité de calcul (6) sont à nouveau reliées directement l'une à l'autre via la connexion de communication (3).

6. Procédé selon l'une quelconque des revendications 1 à 5, caractérisé en ce qu'on envoie, à titre d'ordre de synchronisation, une impulsion individuelle, de préférence une impulsion déterminée.

7. Procédé selon l'une quelconque des revendications 1 à 6, caractérisé en ce que l'unité de calcul principale (4), peu de temps avant le déroulement d'un intervalle, envoie un ordre de commutation à l'unité de calcul (6) à des fins de commutation sur la base de temps (7) pour relier la base de temps (7) directement à la connexion de communication (3).

8. Procédé selon l'une quelconque des revendications 4 à 7, caractérisé en ce que la synchronisation de la base de temps (7) a lieu dans des intervalles périodiques et en ce que de préférence la durée de l'intervalle s'élève à environ 1 minute.

9. Procédé selon l'une quelconque des revendications 1 à 8, caractérisé en ce qu'un récepteur d'horloge radioélectrique est attribué à la base de temps principale (5) pour déterminer le temps absolu.

10. Procédé pour la synchronisation de bases de temps (7) d'états d'informations sériels (2), en particulier dans un poste de transformation, dans lequel on prévoit au moins un état d'informations prioritaire (1) et au moins un état d'informations secondaire (2), l'état d'information prioritaire (1) et l'état d'informations secondaire (2) étant reliés l'un à l'autre et communiquant l'un avec l'autre via une connexion de communication (3), de préférence via un guide d'ondes lumineuses, dans lequel l'état d'informations prioritaire (1) présente une unité de calcul principale (4) et une base de temps principale (5), et l'état d'informations secondaire (2) présente une unité de calcul (6) et une base de temps (7), en particulier selon l'une quelconque des revendications 1 à 9, caractérisé en ce que l'unité de calcul (6), peu de temps avant le déroulement d'un intervalle prédéfini, n'accepte plus et/ou n'exécute plus de commandes supplémentaires, si bien que, lors du déroulement de l'intervalle, l'ordre de synchronisation envoyé par l'unité de calcul principale (4) ou par la base de temps principale (5) peut être traité immédiatement par l'unité de calcul (6) pour la synchronisation de la base de temps (7).

11. Procédé selon la revendication 10, caractérisé en ce que l'unité de calcul principale (4) envoie à l'unité de calcul (6), peu de temps avant le déroulement de l'intervalle, un ordre d'arrêt d'acceptation correspondant de ne pas exécuter des commandes supplémentaires, si bien que l'unité de calcul (6) est prête à recevoir et à traiter immédiatement l'ordre de synchronisation après la réception de ce dernier.

12. Dispositif pour la synchronisation de bases de temps (7) d'états d'informations sériels (2), en particulier dans un poste de transformation et en particulier pour la mise en oeuvre du procédé selon l'une quelconque des revendications 1 à 11, dans lequel on prévoit au moins un état d'informations prioritaire (1) et au moins un état d'informations secondaire (2), l'état d'informations prioritaire (1) et l'état d'informations secondaire (2) étant reliés l'un à l'autre et communiquant l'un avec l'autre via une connexion de communication (3), de préférence via un guide d'ondes lumineuses, dans lequel l'état d'informations prioritaire (1) présente une unité de calcul principale (4) et une base de temps principale (5), et l'état d'informations secondaire (2) présente une unité de calcul (6) et une base de temps (7), caractérisé en ce que la liaison à la connexion de communication (3) peut commuter de l'unité de calcul principale (4) sur l'unité de base (5) et inversement, respectivement, de l'unité de calcul (6) sur la base de temps (7) et inversement, de telle sorte que aussi bien l'unité de calcul principale (4) et l'unité de calcul (6) que l'unité de temps de base (5) et l'unité de base (7) peuvent communiquer directement l'une avec l'autre.
